# EUROPÄISCHE PATENTSCHRIFT

(11) **EP 1 250 388 B1**
(45) Veröffentlichungstag und Bekanntmachung des Hinweises auf die Patenterteilung: **02.03.2005**
(21) Anmeldenummer: 00989863.6
(22) Anmeldetag: 17.11.2000
(51) Int. Cl.: C09D 5/02

(54) **SCHNELLTROCKNENDE, WÄSSRIGE BESCHICHTUNGSMITTEL**
RAPID-CURING AQUEOUS COATING AGENTS
PRODUITS DE REVETEMENT AQUEUX A SECHAGE RAPIDE

(30) Priorität: 23.11.1999 DE 19956128
(43) Veröffentlichungstag der Anmeldung: 23.10.2002
(73) Patentinhaber: Celanese Emulsions GmbH, 61476 Kronberg/Ts. (DE)
(72) Erfinder: KUROPKA, Rolf, 55278 Selzen (DE); FICHTNER, Thomas, 55278 Dalheim (DE)
(74) Vertreter: Ackermann, Joachim, Dr.
(86) Internationale Anmeldenummer: PCT/EP2000/011429
(87) Internationale Veröffentlichungsnummer: WO 2001/038447

(56) Entgegenhaltungen:
- DE-A- 4 406 624

## Beschreibung

Gegenstand der vorliegenden Erfindung sind schnelltrocknende, wässrige Beschichtungsmittel, Verfahren zu deren Herstellung sowie deren Verwendung.

Konventionelle Systeme für schnelltrocknende Beschichtungen sind im allgemeinen lösungsmittelhaltig. Bei Beschichtungsmitteln auf Lösungsmittelbasis kann man die Geschwindigkeit der Trocknung durch Variation des Feststoffgehaltes und/oder des Lösungsmittels steuern. Wäßrige Beschichtungsmittel sind umweltfreundlicher und setzen sich in letzter Zeit mehr und mehr gegenüber Beschichtungsmitteln auf Lösungsmittelbasis durch. Wässrige Beschichtungsmittel enthalten in der Regel Polymerdispersionen als Bindemittel.

Ein Nachteil wässriger Beschichtungsmittel ist die Abhängigkeit der Trocknungsgeschwindigkeit von der Temperatur und der Luftfeuchtigkeit. Bei niedriger Luftfeuchtigkeit ist die Trocknungsgeschwindigkeit oft schnell, manchmal sogar schneller als bei konventionellen Beschichtungsmitteln. Bei hohen Luftfeuchtigkeiten und tiefen Temperaturen allerdings, wie z.B. morgens und abends, sowie vor und nach Regenfällen, ist die Trocknungsgeschwindigkeit deutlich verlangsamt, da das Verdunsten des Wassers verzögert wird. Solche Beschichtungen sind dann erst nach sehr langen Trocknungszeiten regenfest. Eine beschleunigte Trocknung von wäßrigen Beschichtungsmitteln wird insbesondere für Außenanwendungen, wie z.B. Farben für Gebäude, Brücken, Schiffe und Straßenmarkierungen, sowie für Außenputze gewünscht.

Für schnelltrocknende, wässrige Beschichtungsmittel gibt es verschiedene Prinzipien mit praktischer Relevanz.

Bei einer Variante des sogenannten Flokkulierungsprinzips enthält das Beschichtungsmittel ein ionisch stabilisiertes Bindemittel, ein Polyamin und Ammoniak als flüchtige Base, der nach dem Auftragen des Beschichtungsmittels verdampft, wodurch es zur Flokkulierurig des Bindemittels kommt (US-A-5 527 853, EP-A-0 594 321, EP-A-0728 822, EP-A-0 409 459). Bei einer anderen Variante enthält das Beschichtungsmittel ebenfalls ein ionisch stabilisiertes Bindemittel und die Flokkulierung desselben erfolgt dadurch, daß gleichzeitig mit dem Beschichtungsmittel eine Säurelösung oder eine Salzlösung versprüht wird (WO 94129 391, EP-A-0 200 249, US-A-4 571 415, US-A-5 403 393).
Eine Viskositätsänderung an der Oberfläche der Beschichtungsmittel kann dadurch erreicht werden, daß entweder ein Verdicker auf die frische Beschichtung appliziert wird, wodurch es zu einer Erhöhung der Viskosität kommt, wie z.B. in der EP-A-0 721 003 offenbart, oder eine Base auf die frische Beschichtung appliziert wird, die einen Verdicker enthält, der jedoch durch Einstellung eines niedrigen pH-Wertes nicht aktiviert ist. Die EP-B-0 804 514 beschreibt schnellhärtende, wässrige Beschichtungsmittel, umfassend eine wässrige, anionisch stabilisierte Emulsion und ein Polyimin.

Beschichtungsmittel, bei denen die Trocknung durch Verdampfen einer flüchtigen Base wie Ammoniak aktiviert wird, sind in ihrer Anwendungsbreite durch die auftretende Geruchsbelästigung begrenzt. Beschichtungsmittel, die nach ihrer Applikation mit Salzen in Kontakt gebracht werden, haben den Nachteil, dass man auf die Verwendung von schwach stabilisierten Dispersionen eingeschränkt ist.
Die verwendeten Salze müssen mitversprüht werden oder nachträglich aufgesprüht bzw. aufgestreut werden. Im Falle des nachträglichen Aufbringens der Salze in fester oder gelöster Form können erhebliche Anteile z.B. durch Regen weggewaschen werden, wodurch die Effizienz des Verfahrens stark beeinträchtigt wird. Die durch Regen weggewaschenen Salzmengen gelangen meist ins Grundwasser, was unerwünscht ist.
Der Zusatz eines Polyimins zu einem Beschichtungsmittel auf Basis einer wässrigen, anionisch stabilisierten Emulsion hat den Nachteil, dass die Mischung, sobald sie getrocknet ist, zur Gelbfärbung neigt. Dies ist insbesondere bei Emulsionen auf Basis von Vinylacetatcopolymeren der Fall. Für dekorative Außenanwendungen bringt diese Gelbfärbung der Beschichtung unerwünschte Farbtonverschiebungen mit sich. Ein weiterer Nachteil des Zusatzes von Polyiminen liegt in den sehr schwankenden Topfzeiten der Beschichtungsmittel. Je nach Stabilität der verwendeten Emulsion betragen die Topfzeiten zwischen wenigen Minuten und mehreren Tagen. Ebenso ist von Nachteil, dass die Polyimine nur bei Beschichtungsmitteln auf Basis von wässrigen, anionisch stabilisierte Emulsionen eingesetzt werden können. Sehr wünschenswert wäre jedoch auch die Möglichkeit des Einsatzes bei Beschichtungsmitteln auf Basis von wässrigen Emulsionen, die mit Hilfe von Schutzkolloiden (z.B. Celluloseethem oder Polyvinylpyrrolidon) bzw. mit Mischungen von Schutzkolloiden und anionisch stabilisierten Emulgatoren stabilisiert sind.

Überraschenderweise wurde nun gefunden, dass wässrige Beschichtungsmittel, gemäß Anspruch 1, die
a) mindestens ein, vorzugsweise ein, wässriges Bindemittel enthalten und dadurch gekennzeichnet sind, dass sie
b) mindestens ein wasserlösliches, quaternäres Poly(allylamin) enthalten, eine deutlich beschleunigte Trocknung zeigen, ohne dass es beim Trocknen zu einer merklichen Verfärbung kommt.

Bei dem im Beschichtungsmittel enthaltenen Bindemittel kann es sich selbstverständlich auch um ein Gemisch verschiedener Bindemittel handeln.

Der Gewichtsanteil an Bindemittel (fest) im Beschichtungsmittel beträgt, bezogen auf das Gewicht an trockenem Material im Beschichtungsmittel, bevorzugt zwischen 4 und 99,5 Gew.-% und besonders bevorzugt zwischen 7 und 55 Gew.-%.

Der Gesamtgehalt an wasserlöslichen, quaternären Poly(allylaminen) (fest) beträgt, bezogen auf das Bindemittel (fest), bevorzugt bis 10 Gew.-%, besonders bevorzugt 0,05 bis 5 Gew.-% und insbesondere 0,5 bis 3 Gew.-%.

Als wasserlösliche, quaternäre Poly(allylamine) eignen sich bevorzugt die Poly(allylamin-ammoniumchloride), besonders bevorzugt eignen sich die Poly(diallyldialkyl-ammoniumchloride) und insbesondere eignen sich die Poly(dially(dimethyl-ammoniumchloride).
Das Zahlenmittel des Molekulargewichtes der wasserlöslichen, quaternären Poly(allylamine) liegt im Bereich 10 000 g/mol bis 500 000 g/mol.

Zur Erhöhung der Topfzeit der Beschichtungsmittel enthalten diese gegebenenfalls noch einen Emulgator oder ein Gemisch von Emulgatoren. Als Emulgatoren eignen sich bevorzugt Alkyl- und/oder Arylethoxylate, besonders bevorzugt eignen sich nichtionische Alkyl- und/oder Arytethoxylate und insbesondere geeignet sind Polyaryl- und/oder Polyalkylpolyethylenglykolether. Der Gesamtgehalt an Emulgatoren im Beschichtungsmittel beträgt, bezogen auf das Bindemittel, bevorzugt bis zu 10 Gew.-%, besonders bevorzugt bis zu 5 Gew.-% und insbesondere 0,5 bis 3 Gew.-%.

Bei den Bindemitteln handelt es sich bevorzugt um wässrige Polymerdispersionen auf Basis von Homo- und/oder Copolymerisaten. Besonders bevorzugte Homound Copolymerisate enthalten wenigstens ein olefinisch ungesättigtes Monomer als Monomerbaustein. Insbesondere bevorzugt sind Copolymerisate, die 70 bis 99,7 Gew.-%, bezogen auf die Gesamtmenge der Monomere, radikalisch polymerisierbare olefinisch ungesättigte Verbindungen aus der Gruppe der Acrylund Methacrylsäureester von (C₁ bis C₁₂)-Monoalkoholen, vorzugsweise von (C₁ bis C₈)-Monoalkoholen, beispielsweise Methanol, Ethanol, iso-Propanol, isoButanol, n-Butanol und 2-Ethylhexylalkohol, der vinylaromatischen Monomere, der Vinylester von (C₁ bis C₁₂)-Alkanmonocarbonsäuren, beispielsweise Vinylacetat, Vinylpropionat, Vinyl-n-butyrat, Vinyllaurat, ®VeoVa 9 und ®VeoVa 10 (Shell-Chemie, Vinylester α,α-Dialkyl-verzweigter Monocarbonsäuren), der Vinylhalogenide, beispielsweise Vinylchlorid und Vinylidenchlorid, der α,β-monoolefinisch ungesättigten Nitrite, beispielsweise Acrylnitril und Methacrylnitril, sowie der Alkylester von mono-olefinisch ungesättigten Dicarbonsäuren, beispielsweise Malein- und Fumarsäure-di-n-butylester, enthalten.

Die Copolymerisate enthalten vorzugsweise außerdem 0,3 bis 10 Gew.-%, besonders bevorzugt 0,5 bis 5 Gew.-%, bezogen auf die Gesamtmenge der Monomere, α,β-mono-olefinisch ungesättigte Mono- und Dicarbonsäuren, beispielsweise Acrylsäure, Methacrylsäure, Itaconsäure, Maleinsäure und Fumarsäure, sowie deren gegebenenfalls an den Stickstoffatomen substituierte Amide, beispielsweise Acrylamid, Methacrylamid, N-Methylolacrylamid und N-Butoxymethacrylamid.

Weiterhin können 0 bis 20 Gew.-%, vorzugsweise 0,5 bis 5 Gew.-%, bezogen auf die Gesamtmenge der Monomere, funktionelle Monomere in den Copolymerisaten enthalten sein, wie beispielsweise Hydroxylgruppen-haltige Monomere, wie Hydroxyalkylacrylate und -methacrylate, insbesondere Hydroxyethylmethacrylat und Hydroxypropylmethacrylat, und/oder die Naßhaftung verbessernde Acetylacetoxygruppen-haltige Monomere, insbesondere Allylacetoacetat, Acetylacetoxy-ethylmethacrylat und Acetytacetoxybutylmethacrylat, und/oder vemetzend wirkende Monomere wie Epoxidgruppen-haltige und Silangruppen-haltige Monomere, insbesondere Glycidylacrylat, Glycidylmethacrytat, Vinyltrimethoxysilan und Methacryloacypropyltrimethoxysilan, und/oder Stickstoff-haltige Monomere aus der Gruppe der polymerisierbaren Monomere mit einer Amino-, Ureido- oder N-heterocyclischen-Gruppe, beispielsweise Dimethylaminoethylacrylat und -methacrylat, N-(2-Methacryloytethyl)-ethylenhamstoff, und/oder Ketogruppen-haltige Monomere, beispielsweise Diacetonacrylamid, Diacetonmethacrylamid, Acrolein und 2-Butanonmethacrylsäureester.

In selbstvernetzenden Dispersionen können Ketogruppen-haltige Polymerisate noch bis zu 5 Gew.-%, bezogen auf die Gesamtmenge der Monomere, eines di- oder polyfunktionellen Carbonsäurehydrazids, beispielsweise Adipinsäurehydrazid, enthalten.

Bevorzugt handelt es sich bei den als Bindemittel verwendeten Polymerdispersionen um anionisch stabilisierte Polymerdispersionen oder Polymerdispersionen, die mit Mischungen aus nichtionischen und anionischen Stabilierungsmitteln oder Mischungen aus nichtionischen Emulgatoren, anionischen Emulgatoren und Schutzkolloiden stabilisiert sind.

Als nichtionische Emulgatoren sind z.B. Alkylpolyglykolether oder Ethoxylierungsprodukte von Polypropylenoxid geeignet. Als anionische Emulgatoren kommen in erster Linie die Alkali- oder Ammoniumsalze von Alkyl-, Aryl- oder Alkylarylsulfonaten, -sulfaten, -phosphaten oder -phosphonaten in Frage.
Als Schutzkolloide eignen sich Naturstoffe, wie z.B. Gummiarabicum, Stärke und Alginate, oder modifizierte Naturstoffe, wie z.B. Cellulosederivate, oder synthetische Polymere, wie z.B. Polyvinylalkohol und Polyvinylpyrrolidon. oder Gemische derselben.

Neben Emulgatoren und Schutzkolloiden können die Polymerdispersionen gegebenenfalls noch Additive, Hilfsstoffe und/oder nichtcopolymerisierbare Vemetzer enthalten.

Gegebenenfalls enthalten die Beschichtungsmittel noch Filmbildemittel, Pigmente, Füllstoffe (wie z.B. Titandioxid, Talkum, Calcit, Dolomit), Verdickungsmittel (wie z.B. Celluloseether, Acrylsäure, Polyurethanverdicker), Schutzkolloide, Dispergiermittel, Netzmittel, Konservierungsmittel und/oder Entschäumer. Die Pigmentvolumenkonzentration (PVK) liegt im allgemeinen zwischen 15 und 90 %.

Bei den erfindungsgemäßen Beschichtungsmitteln handelt es sich bevorzugt um Putze, Farben, Grundierungen oder Holzanstrichmittel für Außenanwendungen. Besonders bevorzugt handelt es sich bei den erfindungsgemäßen Beschichtungsmitteln um Kunstharzputze, Fassadenfarben, Straßenmarkierungsfarben oder Hotzschutzfarben.

Im weiteren Sinne kann es sich bei den erfindungsgemäßen Beschichtungsmitteln auch um Klebstoffe, Kleister, Kitte, Dichtungsmassen oder Druckausgleichsschichten für Wärmedämmverbundsysteme handeln.

Ein Verfahren zur Herstellung der erfindungsgemäßen Beschichtungsmittel, gemäß Anspruch 1 besteht darin,
eine Mischung herzustellen, enthaltend
a) mindestens ein, vorzugsweise ein, wässriges Bindemittel,
b) mindestens ein wasserlösliches, quaternäres Poly(allylamin) und
c) gegebenenfalls einen Emulgator oder ein Gemisch von Emulgatoren, wobei gegebenenfalls der Mischung anschließend noch Filmbildemittel, Pigmente, Füllstoffe (wie z. B. Titandioxid, Talkum, Calcit, Dolomit), Verdickungsmittel (wie z.B. Celluloseether, Acrylsäure, Polyurethanverdicker), Schutzkolloide, Dispergiermittel, Netzmittel, Konservierungsmittel, Emulgatoren und/oder Entschäumer zugesetzt werden können.

Ein weiteres Verfahren zur Herstellung der erfindungsgemäßen Beschichtungsmittel besteht darin, ein Beschichtungsmittel mit mindestens einem wasserlöslichen, quaternären Poly(allylamin) und gegebenenfalls mit einem Emulgator oder einem Gemisch von Emulgatoren zu versetzen. Hierzu bevorzugt geeignete Emulgatoren sind Polyaryl- und/oder Polyalkylethylenglykolether.

Gegenstand der Erfindung ist auch die Verwendung der erfindungsgemäßen Beschichtungsmittel als Bindemittel.

Ebenfalls Gegenstand der Erfindung ist die Verwendung von wasserlöslichen, quaternären Poly(allylaminen) oder Gemischen von wasserlöslichen, quaternären Poly(allylaminen) als Trocknungsbeschleuniger in Beschichtungsmitteln und Bindemitteln.

Die Erfindung wird im folgenden anhand von Ausführungsbeispielen näher beschrieben, ohne dadurch jedoch beschränkt zu werden.

### A) Herstellung von erfindungsgemäßen Kunstharzputzen und Vergleichsputzen

Die in den Beispielen bzw. Vergleichsbeispielen beschriebenen erfindungsgemäßen Kunstharzputze bzw. Vergleichsputze weisen die in Tabelle 1 angegebene Grundrezeptur auf.

**Tabelle 1:**

| Grundrezeptur der erfindungsgemäßen Kunstharzputze und Vergleichsputze | | |
|---|---|---|
| Bestandteile | | Gewichtsteile |
| 1. | Wasser | 56,9 |
| 2. | Celluloseether (Typ MC, mittelviskos) | 1,5 |
| 3. | Dispergiermittel (Polyacrylat) | 3,0 |
| 4. | Konservierungsmittel (Isothiazolinon) | 2,0 |
| 5. | Netzmittel (Polyphosphat) | 0,6 |
| 6. | Natronlauge, 10 % | 2,0 |
| 7. | Entschäumer (Mineralölbasis) | 2,0 |
| 8. | Kunstharzdispersion (Mowilith® DM 2452, Fa. Clariant GmbH) | 140,0 |
| 9. | Pigment (Titandioxid) | 20,0 |
| 10. | Füllstoff (Kaolin 3 µm) | 20,0 |
| 11. | Füllstoff (Calcit Teilchengröße 40 µm) | 150,0 |
| 12. | Füllstoff (Calcit Teilchengröße 130 µm) | 170,0 |
| 13. | Füllstoff (Calcit 130 µm - 500 µm) | 100,0 |
| 14. | Strukturkom (Calcit 1,5 - 2,0 mm) | 300,0 |
| 15. | Filmbildehilfsmittel (Aliphatischer Kohlenwasserstoff) | 4,0 |
| 16. | Filmbildehilfsmittel (Glykolether) | 6,0 |
| 17. | Faser (Polyethylen) | 2,0 |
| | | 980,0 |

### Vergleichsbeispiel 1: Herstellung eines Vergleichsputzes 1, der kein wasserlösliches, quaternäres Poly(allyiamin) enthält.

Die Zusammensetzung des Vergleichsputzes 1 entspricht der in Tabelle 1 angegebenen Grundrezeptur. Die als Bindemittel eingesetzte Kunstharzdispersion Mowilith® DM 2452 der Clariant GmbH (Tabelle 1, Bestandteil Nr. 8) hat einen Feststoffgehalt von 50 %, einen pH-Wert von 6 und eine Viskosität von 400 mPa·s. Die Monomerbasis dieser Dispersion bilden Vinylacetat, Vinylester der Versaticsäure® und Acrylsäureester.

Zur Herstellung des Putzes wird das Wasser vorgelegt und die übrigen Bestandteile werden in der angegebenen Reihenfolge unter Mischen zugegeben. Nach Beendigung der Rohstoffdosierung wird der Putz bis zur vollständigen Homogenisierung gemischt.

### Beispiel 1: Herstellung des erfindungsgemäßen Kunstharzputzes 1, der ein wasserlösliches, quaternäres Poly(allylamin) enthält.

Die Zusammensetzung des Kunstharzputzes 1 unterscheidet sich von der in Tabelle 1 angegebenen Grundrezeptur lediglich dadurch, dass sie zusätzlich noch 1,7 Gew.-Teile (40 %) eines Poly(diatlytdimethylammoniumchiorids) (Cartafix VXT der Clariant GmbH), sowie 0,04 Gew.-Teile (40 %) eines Poly(arylalkyl)-phenotpolyethylenglykolethers (Emulsogen 3474 der Clariant GmbH) enthält. Zur Herstellung des Putzes wird das Wasser vorgelegt und die übrigen Bestandteile werden in der angegebenen Reihenfolge unter Mischen zugegeben. Das quatemäre Poly(allylamin) und der Glykolether werden als letztes zugegeben. Nach Beendigung der Rohstoffdosierung wird der Putz bis zur vollständigen Homogenisierung gemischt.

### Vergleichsbeispiel 2: Herstellung eines Vergleichsputzes 2, der ein Polyimin enthält.

Die Zusammensetzung des Vergleichsputzes 2 unterscheidet sich von der in Tabelle 1 angegebenen Grundrezeptur lediglich dadurch, dass sie zusätzlich noch 0,3 Gew.-Teile eines Polyimins (Basophob RS der Fa. BASF) enthält. Als Bindemittel wird die gleiche Kunstharzdispersion wie in Vergleichsbeispiel 1 eingesetzt. Zur Herstellung des Putzes wird das Wasser vorgelegt und die übrigen. Bestandteile werden unter Mischen in der angegebenen Reihenfolge zugegeben. Das Polyimin wird als letztes zugegeben. Nach Beendigung der Rohstoffdosierung wird der Putz bis zur vollständigen Homogenisierung gemischt.

### Beispiele 2 bis 5: Herstellung der erfindungsgemäßen Kunstharzputze 2 bis 5, die verschiedene Mengen eines wasserlöslichen, quatemären Poly(allylamins) enthalten.

Die Zusammensetzungen der erfindungsgemäßen Kunstharzputze 2 bis 5 unterscheiden sich von der in Tabelle 1 angegebenen Grundrezeptur lediglich dadurch, dass sie zusätzlich die in der Tabelle 2 angegebenen Gewichtsteile eines Poly(diallyldimethylammoniumchlorids) (Cartafix VXT der Clariant GmbH) und eines Poly(arylalkyl)phenolpolyethylenglykolethers (Emulsogen 3474 der Clariant GmbH) enthalten.

**Tabelle 2:**

| Kunstharzputz | Gew.-Teile Cartafix VXT | Gew.-Teile Emulsogen 3474 |
|---|---|---|
| Kunstharzputz 2 | 1.0 | 0,7 |
| Kunstharzputz 3 | 1,2 | 0,6 |
| Kunstharzputz 4, | 1,5 | 0,5 |
| Kunstharzputz 5 | 1,9 | 0,4 |

Zur Herstellung der Putze wird das Wasser vorgelegt, und die übrigen Bestandteile werden in der angegebenen Reihenfolge unter Mischen zugegeben, wobei das Cartafix VXT und das Emulsogen 3474 als letzte zugegeben werden. Nach Beendigung der Rohstoffdosierung wird der Putz bis zur vollständigen Homogenisierung gemischt.

### B) Anwendungstechnische Prüfungen der Vergleichsputze 1 und 2 sowie der erfindungsgemäßen Kunstharzputze 1 bis 5

### a) Herstellung von Prüfkörpern

Das Substrat, die Vergleichsputze 1 und 2, die erfindungsgemäßen Kunstharzputze 1 bis 5 und das benötigte Werkzeug werden in einer Klimakammer auf die Prüftemperatur von 5°C temperiert. Bei dieser Temperatur werden die Putze mittels einer Traufel auf eine Faserzementplatte mit den Maßen 10 cm × 15 cm appliziert und anschließend auf die Komstärke abgezogen und strukturiert.

### b) Ausprüfung der Prüfkörper

Die Prüfkörper werden nach verschiedenen Trocknungszeiten bei einer Prüftemperatur von 5°C auf ihren Trocknungsgrad hin untersucht. Dazu werden die Prüfkörper jeweils mit 60 Gramm Wasser besprüht. Die Erzeugung des Wassemebels erfolgt dabei mittels eines handelsüblichen Zerstäubers. Die Prüfkörper befinden sich während des Besprühens in der Senkrechten. Die herablaufende Flüssigkeit wird quantitativ aufgefangen. Solange das Beschichtungsmittel noch nicht getrocknet ist werden durch die Prüfflüssigkeit Partikel ausgewaschen, wodurch sich die Prüfflüssigkeit weißlich verfärbt. Aus der Intensität der Einfärbung kann auf den Trocknungszustand des Beschichtungsmittels geschlossen werden.

Die Beurteilung des Trocknungsgrades der Putze erfolgt nach verschiedenen Zeiten gemäß den sechs Klassen 1 bis 6, die in Tabelle 3 aufgeführt sind.

Neben den Trocknungsgraden der Putze werden auch die Vergilbungsgrade der getrockneten Putze nach verschieden langen Lagerzeiten bestimmt. Die Beurteilung erfolgt gemäß den sechs Klassen 1 bis 6, die ebenfalls in Tabelle 3 aufgeführt sind.

| Tabelle 3: Trocknungsgrade und Vergilbungsgrade | | |
|---|---|---|
| Klasse | Trocknungsgrad | Vergilbungsgrad |
| 1 | trocken | nicht vergilbt |
| 2 | fast trocken | sehr wenig vergilbt |
| 3 | etwas trocken | wenig vergilbt |
| 4 | feucht | vergilbt |
| 5 | naß | stark vergilbt |
| 6 | sehr naß | sehr stark vergilbt |

Die Trocknungsgrade und Vergilbungsgrade der Vergleichsputze 1 und 2 und der erfindungsgemäßen Kunstharzputze 1 bis 5 sind gemäß den in Tabelle 3 angegebenen 6 verschiedenen Klassen in Tabelle 4 aufgeführt.

**Tabelle 4:**

| Trocknungsgrade und Vergilbungsgrade der Vergleichsputze 1 und 2 und der erfindungsgemäßen Kunstharzputze 1 bis 5 | | | | | |
|---|---|---|---|---|---|
| Putze | Trocknungsgrad nach | | | Vergilbung der getrockneten Putzschicht nach | |
| | 0,5 Std. | 1 Std. | 2 Std. | 1 Tag Lagerung bei 50°C | 10 Tage Lagerung bei 50°C |
| Vergleichsputz 1 | 6 | 5 | 4 | 1 | 1 |
| Vergleichsputz 2 | 3 | 2 | 1 | 4 | 6 |
| Kunstharzputz 1 | 3-4 | 2 | 1 | | |
| Kunstharzputz 2 | 5 | 3 | 2 | 1 | 1 |
| Kunstharzputz 3 | 5 | 3 | 1-2 | 1 | 1 |
| Kunstharzputz 4 | 4 | 2 | 1-2 | 1 | 1 |
| Kunstharzputz 5 | 3 | 2 | 1 | 1 | 1 |

Tabelle 4 zeigt klar, dass die erfindungsgemäßen Kunstharzputze 1 bis 5 gegenüber dem Vergleichsputz 1 deutlich verbesserte Trocknungsgrade aufweisen und gleichzeitig im Vergleich zum Vergleichsputz 2 keine Vergilbungsneigung zeigen.

## Patentansprüche

1. Schnelltrocknendes, wässriges Beschichtungsmittel, enthaltend mindestens ein wässriges Bindemittel, **dadurch gekennzeichnet, dass** es zusätzlich mindestens ein wasserlösliches, quatemäres Poly(allylamin) enthält, wobei der Gesamtgehalt an wasserlöslichen, quatemären Poly(allylaminen), bezogen auf das im Beschichtungsmittel enthaltene Bindemittel, mindestens 0,05 Gew.-% beträgt und das Zahlenmittel des Molekulargewichtes des mindestens einen quaternären Poly(allylamins) im Bereich von 10 000 g/mol bis 500 000 g/mol liegt.

2. Beschichtungsmittel nach Anspruch 1, **dadurch gekennzeichnet, dass** der Gewichtsanteil an Bindemittel, bezogen auf das Gewicht an trockenem Material im Beschichtungsmittel, zwischen 4 und 99,5 Gew.-% beträgt.

3. Beschichtungsmittel nach Anspruch 1 oder 2, **dadurch gekennzeichnet, dass** der Gesamtgehalt an wasserlöslichen, quaternären Poly(allylaminen), bezogen auf das im Beschichtungsmittel enthaltene Bindemittel, bis 10 Gew.-% beträgt.

4. Beschichtungsmittel nach mindestens einem der Ansprüche 1 bis 3, **dadurch gekennzeichnet, dass** es sich bei den quatemären Poly(allylaminen) um Poly(diallyldialkylammoniumchloride) handelt.

5. Beschichtungsmittel nach Anspruch 4, **dadurch gekennzeichnet, dass** es sich bei den quaternären Poly(allylaminen) um Poly(diallyldimethylammoniumchloride) handelt.

6. Beschichtungsmittel nach mindestens einem der Ansprüche 1 bis 5, **dadurch gekennzeichnet, dass** das Beschichtungsmittel gegebenenfalls noch einen Emulgator oder ein Gemisch von Emulgatoren enthält.

7. Beschichtungsmittel nach Anspruch 6, **dadurch gekennzeichnet, dass** der Gesamtgehalt an Emulgatoren, bezogen auf das im Beschichtungsmittel enthaltene Bindemittel, bis 10 Gew.-% beträgt.

8. Beschichtungsmittel nach Anspruch 7, **dadurch gekennzeichnet, dass** es sich bei den Emulgatoren um Polyaryl- und/oder Polyalkylpolyethylenglykolether handelt.

9. Beschichtungsmittel nach mindestens einem der Ansprüche 1 bis 8, **dadurch gekennzeichnet, dass** es sich bei den im Beschichtungsmittel enthaltenen Bindemitteln um wässrige Polymerdispersionen basierend auf Homound/oder Copolymerisaten handelt.

10. Beschichtungsmittel nach Anspruch 9, **dadurch gekennzeichnet, dass** die Homo- und Copolymerisate mindestens ein olefinisch ungesättigtes Monomer als Monomerbaustein enthalten.

11. Beschichtungsmittel nach Anspruch 10, **dadurch gekennzeichnet, dass** die Copolymerisate, bezogen auf die Gesamtmenge der Monomeren
a) 70 bis 99,7 Gew.-% an einer oder mehreren radikalisch polymerisierbaren olefinisch ungesättigten Verbindungen aus der Gruppe der Acryl- und Methacrylsäureester von (C₁ bis C₁₂)-Monoalkoholen, der vinylaromatischen Monomere, der Vinylester von (C₁ bis C₁₂)-Alkanmonocarbonsäuren, der Vinylhalogenide, der α,β-mono-olefinisch ungesättigten Nitrile und/oder der Alkylester von mono-olefinisch ungesättigten Dicarbonsäuren,
b) 0,3 bis 10 Gew.-% an einer oder mehreren Verbindungen aus der Gruppe der α,β-monoolefinisch ungesättigten Mono- und Dicarbonsäuren und/oder deren Amide oder N-substituierten Amide, und
c) 0 bis 20 Gew.-% an Verbindungen aus der Gruppe der Hydroxylgruppenhaltigen Monomere, der Acetylacetoxygruppen-hattigen Monomere, der Epoxidgruppen-haltigen Monomere, der Sitangruppen-haltigen Monomere, der Stickstoff-haltigen Monomere und/oder der Ketogruppen-hatägen Monomere, enthalten.

12. Beschichtungsmittel nach mindestens einem der Ansprüche 9 bis 11, **dadurch gekennzeichnet, dass** die Polymerdispersion zur Stabilisierung nichtionische Emulgatoren, anionische Emulgatoren und/oder Schutzkolloide enthält.

13. Beschichtungsmittel nach mindestens einem der Ansprüche 1 bis 12, **dadurch gekennzeichnet, dass** das Beschichtungsmittel gegebenenfalls noch Filmbitdemittel, Pigmente, Füllstoffe, Verdickungsmittel, Dispergiermittel, Netzmittel, Konservierungsmittel, Emulgatoren, Schutzkolloide und/oder Entschäumer enthält.

14. Beschichtungsmittel nach mindestens einem der Ansprüche 1 bis 13, **dadurch gekennzeichnet, dass** es sich bei dem Beschichtungsmittel um einen Putz, eine Farbe, eine Grundierung oder ein Holzanstrichmittel für Außenanwendungen handelt.

15. Beschichtungsmittel nach Anspruch 14, **dadurch gekennzeichnet, dass** es sich bei dem Beschichtungsmittel um einen Kunstharzputz, eine Fassadenfarbe, eine Straßenmarkierungsfarbe oder eine Holzschutzfarbe handelt.

16. Beschichtungsmittel nach mindestens einem der Ansprüche 1 bis 13, **dadurch gekennzeichnet, dass** es sich bei dem Beschichtungsmittel um einen Klebstoff, einen Kleister, einen Kitt, eine Dichtungsmasse oder eine Druckausgleichsschicht für Wärmedämmverbundsysteme handelt.

17. Verfahren zur Herstellung eines schnelltrocknenden; wässrigen Beschichtungsmittels bei dem eine Mischung hergestellt wird, enthaltend
a) mindestens ein wässriges Bindemittel,
b) mindestens ein wasserlösliches, quatemäres Poly(allylamin wobei der Gesamtgehalt an wasserlöslichen, quatemären Poly(allylaminen), bezogen auf das im Beschichtungsmittel enthaltene Bindemittel, mindestens 0,05 Gew.-% beträgt und das Zahlenmittel des Molekulargewichtes des mindestens einen quaternären Poly(allylamins) im Bereich von 10 000 g/mol bis 500 000 g/mol liegt, und
c) gegebenenfalls einen Emulgator oder ein Gemisch von Emulgatoren,
wobei gegebenenfalls der Mischung anschließend noch Filmbitdemittel, Pigmente, Füllstoffe, Verdickungsmittel, Schutzkolloide, Dispergiermittel, Netzmittel, Konservierungsmittel und/oder Entschäumer zugesetzt werden können.

18. Verfahren zur Herstellung eines schnelltrocknenden, wässrigen Beschichtungsmittels bei dem ein Beschichtungsmittel mit mindestens einem wasserlöslichen, quaternären Poly(allylarnin) und gegebenenfalls mit einem Emulgator oder einem Gemisch von Emulgatoren versetzt wird, wobei der Gesamtgehalt an wasserlöslichen, quaternären Poly(allylaminen), bezogen auf das Beschichtungsmittel, mindestens 0,05 Gew.-% beträgt und das Zahlenmittel des Molekulargewichtes des mindestens einen quaternären Poly(allylamins) im Bereich von 10 000 g/mol bis 500 000 g/mol liegt.

19. Verwendung eines Beschichtungsmittels entsprechend einem der Ansprüche 1 bis 16 als Bindemittel.

20. Verwendung von wasserlöslichen, quaternären Poly(allylaminen) oder Gemischen von wasserlöslichen, quaternären Poly(allylaminen) als Trocknungsbeschleuniger in wässrigen Beschichtungsmitteln oder Bindemitteln.

## Claims

1. A rapid-drying aqueous coating composition comprising at least one aqueous binder, **characterized in that** it further comprises at least one water-soluble quaternary poly(allylamine), the total amount of water-soluble quaternary poly(allylamines), based on the binder present in the coating composition being at least 0.05% by weight and the number average of the molecular weight of the at least one quaternary poly(allylamine) being in the range from 10 000 g/mol to 500 000 g/mol.

2. The coating composition of claim 1, **characterized in that** the weight fraction of binder, based on the weight of dry material in the coating composition, is between 4 and 99.5% by weight.

3. The coating composition of claim 1 or 2, **characterized in that** the total amount of water-soluble quaternary poly(allylamines), based on the binder present in the coating composition, is up to 10% by weight.

4. The coating composition of at least one of claims 1 to 3, **characterized in that** the quaternary poly(allylamines) comprise poly(diallyldialkylammonium chlorides).

5. The coating composition of claim 4, **characterized in that** the quaternary poly(allylamines) comprise poly(diallyldimethylammonium chlorides).

6. The coating composition of at least one of claims 1 to 5, **characterized in that** the coating composition further comprises, where appropriate, an emulsifier or mixture of emulsifiers.

7. The coating composition of claim 6, **characterized in that** the total emulsifier content, based on the binder present in the coating composition, is up to 10% by weight.

8. The coating composition of claim 7, **characterized in that** the emulsifiers comprise polyaryl and/or polyalkyl polyethylene glycol ethers.

9. The coating composition of at least one of claims 1 to 8, **characterized in that** the binders present in the coating composition comprise aqueous polymer dispersions based on homopolymers and/or copolymers.

10. The coating composition of claim 9, **characterized in that** the homopolymers and copolymers comprise at least one olefinically unsaturated monomer building block.

11. The coating composition of claim 10, **characterized in that** the copolymers, based on the total amount of the monomers, contain
a) from 70 to 99.7% by weight of one or more free-radically polymerizable olefinically unsaturated compounds from the group of acrylates and methacrylates of (C₁ to C₁₂) monoalcohols, vinylaromatic monomers, vinyl esters of (C₁ to C₁₂) alkanemonocarboxylic acids, vinyl halides, α,β-monoolefinically unsaturated nitriles and/or alkyl esters of monoolefinically unsaturated dicarboxylic acids,
b) from 0.3 to 10% by weight of one or more compounds from the group of α,β-monoolefinically unsaturated monocarboxylic and dicarboxylic acids and/or their amides or N-substituted amides, and
c) from 0 to 20% by weight of compounds from the group of hydroxyl-containing monomers, acetylacetoxy-containing monomers, monomers containing epoxide groups, monomers containing silane groups, nitrogen-containing monomers and/or monomers containing keto groups.

12. The coating composition of at least one of claims 9 to 11, **characterized in that** for stabilization the polymer dispersion comprises nonionic emulsifiers, anionic emulsifiers and/or protective colloids.

13. The coating composition of at least one of claims 1 to 12, **characterized in that** the coating composition further comprises, where appropriate, film formers, pigments, fillers, thickeners, dispersants, wetting agents, preservatives, emulsifiers, protective colloids and/or defoamers.

14. The coating composition of at least one of claims 1 to 13, **characterized in that** the coating composition is a render, a paint, a primer or a wood coating material for exterior applications.

15. The coating composition of claim 14, **characterized in that** the coating composition is a synthetic resin render, a masonry paint, a road marking paint or a wood preservative paint.

16. The coating composition of at least one of claims 1 to 13, **characterized in that** the coating composition is an adhesive, a paste, a putty, a sealant or a pressure, compension coat for exterior insulation and finish systems.

17. A process for preparing a rapid-drying aqueous coating composition, involving preparing a mixture comprising
a) at least one aqueous binder,
b) at least one water-soluble quaternary poly(allylamine), the total amount of water-soluble quaternary poly(allylamines), based on the binder present in the coating composition, being at least 0.05% by weight and the number average of the molecular weight of the at least one quaternary poly(allylamine) being in the range from 10 000 g/mol to 500 000 g/mol, and
c) if desired, an emulsifier or mixture of emulsifiers, after which the mixture may where appropriate be further admixed with film formers, pigments, fillers, thickeners, protective colloids, dispersants, wetting agents, preservatives, emulsifiers and/or defoamers.

18. A process for preparing a rapid-drying aqueous coating composition which involves adding to a coating composition at least one water-soluble quaternary poly(allylamine) and, where appropriate, an emulsifier or mixture of emulsifiers, the total amount of water-soluble quaternary poly(allylamines), based on the coating composition, being at least 0.05% by weight and the number average of the molecular weight of the at least one quaternary poly(allylamine) being in the range from 10 000 g/mol to 500 000 g/mol.

19. The use of a coating composition according to one of claims 1 to 16 as binder.

20. The use of water-soluble quaternary poly(allylamines) or mixtures of water-soluble quaternary poly(allylamines) as drying accelerators in aqueous coating compositions or binders.

## Revendications

1. Produit de revêtement aqueux à séchage rapide, contenant au moins un liant aqueux, **caractérisé en ce qu'**il contient au moins une poly(allylamine) quaternaire, soluble dans l'eau, dans lequel la teneur globale en poly(allylamines) quaternaires, solubles dans l'eau, rapportée au liant contenu dans le produit de revêtement, s'élève à au moins 0,05 % en poids et la masse moléculaire moyenne en nombre de la au moins une poly(allylamine) quaternaire se situe dans la gamme de la 000 g/mole à 500 000 g/mole.

2. Produit de revêtement selon la revendication 1, **caractérisé en ce que** la teneur en poids de liant, rapportée au poids du matériau sec dans le produit de revêtement, s'élève à entre 4 et 99,5 % en poids.

3. Produit de revêtement selon la revendication 1 ou 2, **caractérisé en ce que** la teneur globale en poly(allylamines) quaternaires, solubles dans l'eau, rapportée au liant contenu dans le produit de revêtement, s'élève à jusqu'à 10 % en poids.

4. Produit de revêtement selon au moins l'une des revendications 1 à 3, **caractérisé en ce qu'**il s'agit, pour les poly(allylamines) quaternaires, de poly(chlorure de diallyldialkylammonium).

5. Produit de revêtement selon la revendication 4, **caractérisé en ce qu'**il s'agit, pour les poly(allyl-amines) quaternaires, de poly(chlorure de diallyldiméthylammonium).

6. Produit de revêtement selon au moins l'une des revendications 1 à 5, **caractérisé en ce que** le produit de revêtement contient éventuellement encore un agent émulsifiant ou un mélange d'agents émulsifiants.

7. Produit de revêtement selon la revendication 6, **caractérisé en ce que** la teneur globale en agents émulsifiants, par rapport au liant contenu dans le produit de revêtement, s'élève à jusqu'à 10 % en poids.

8. Produit de revêtement selon la revendication 7,
**caractérisé en ce qu'**il s'agit, pour les agents émulsifiants, de polyaryl- et/ou polyalkylpolyéthylèneglycoléther.

9. Produit de revêtement selon au moins l'une des revendications 1 à 8, **caractérisé en ce qu'**il s'agit, pour les liants contenus dans le produit de revêtement, de dispersions aqueuses de polymères à base d'homo- et/ou copolymérisats.

10. Produit de revêtement selon la revendication 9, **caractérisé en ce que** les homo- et copolymérisats contiennent au moins un monomère oléfiniquement insaturé comme squelette de monomère.

11. Produit de revêtement selon la revendication 10, **caractérisé en ce que** les copolymérisats, par rapport à la quantité globale des monomères contiennent
a) 70 à 99,7 % en poids d'un ou de plusieurs composés oléfiniquement insaturés polymérisables par voie radicalaire dans le groupe des esters d'acide acrylique et méthacrylique de monoalcools en C₁ à C₁₂, des monomères vinylaromatiques, des esters de vinyle d'acides alcanemonocarboxyliques en C₁ à C₁₂, des halogénures de vinyle, des nitriles α,β-mono-oléfiniquement insaturés et/ou des esters alkyliques d'acides dicarboxyliques mono-oléfiniquement insaturés,
b) 0,3 à 10 % en poids d'un ou de plusieurs composés du groupe des acides mono- et dicarboxyliques α,β-mono-oléfiniquement insaturés et/ou de leurs amides ou amides N-substitués, et
c) 0 à 20 % en poids de composés du groupe des monomères contenant des groupes hydroxyle, des monomères contenant des groupes acétylacétoxy, des monomères contenant des groupes époxyde, des monomères contenant des groupes silane, des monomères contenant de l'azote et/ou des monomères contenant des groupes céto.

12. Produit de revêtement selon.au moins l'une des revendications 9 à 11, **caractérisé en ce que** la dispersion de polymères contient pour la stabilisation des agents émulsionnants non ioniques, des agents émulsionnants anioniques et/ou des colloïdes protecteurs.

13. Produit de revêtement selon au moins l'une des revendications 1 à 12, **caractérisé en ce que** le produit de revêtement contient au moins encore un agent filmogène, des pigments, des charges, des agents épaississants, des agents dispersants, des agents mouillants, des conservateurs, des agents émulsionnants, des colloïdes protecteurs et/ou des agents anti-mousse.

14. Produit de revêtement selon au moins l'une des revendications 1 à 13, **caractérisé en ce qu'**il s'agit, pour le produit de revêtement d'un enduit, d'une peinture, d'une couche de base ou d'une peinture pour bois pour utilisation en plein air.

15. Produit de revêtement selon la revendication 14, **caractérisé en ce qu'**il s'agit, pour le produit de revêtement d'un enduit synthétique, d'une peinture de façade, d'une peinture de marquage de rue ou d'une peinture de protection du bois.

16. Produit de revêtement selon au moins l'une des revendications 1 à 13, **caractérisé en ce qu'**il s'agit, pour le produit de revêtement, d'une colle, d'une colle de pâte, d'un ciment, d'un produit d'étanchéité ou d'une couche de compensation d'impression pour des systèmes de connexion isolés thermiquement.

17. Procédé pour la préparation d'un produit de revêtement aqueux à séchage rapide dans lequel on prépare un mélange, contenant
a) au moins un liant aqueux,
b) au moins une poly(allylamine) quaternaire soluble dans l'eau, dans laquelle la teneur globale en poly(allylamines) quaternaires solubles dans l'eau, par rapport au liant contenu dans le produit de revêtement, s'élève à au moins 0,05 % en poids et la masse moléculaire moyenne en nombre de la au moins une poly(allylamine) quaternaire se situe dans la gamme de 10 000 g/mole à 500 000 g/mole, et
c) éventuellement un agent émulsifiant ou un mélange d'agents émulsifiants, dans lequel on peut encore éventuellement ajouter au mélange des agents filmogènes, des pigments, des charges, des agents épaississants, des colloïdes protecteurs, des agents dispersants, des agents mouillants, des conservateurs et/ou des agents anti-mousse.

18. Procédé pour la préparation d'un produit de revêtement aqueux à séchage rapide, dans lequel on ajoute à un produit de revêtement au moins une poly(allylamine) quaternaire soluble dans l'eau et éventuellement un agent émulsifiant ou un mélange d'agents émulsifiants, la teneur globale en poly(allylamines) quaternaires solubles dans l'eau, par rapport au produit de revêtement, s'élevant à au moins 0,05 % en poids et la masse moléculaire moyenne en nombre de la au moins une poly(allylamine) quaternaire se situant dans la gamme de 10 000 g/mole à 500 000 g/mole.

19. Utilisation d'un produit de revêtement selon l'une des revendications 1 à 16 comme liant.

20. Utilisation de poly(allylamines) quaternaires solubles dans l'eau ou de mélanges de poly(allylamines) quaternaires solubles dans l'eau comme accélérateurs de séchage dans des produits de revêtement ou des liants aqueux.
